# EUROPEAN PATENT APPLICATION

(11) **EP 1 139 132 A2**
(43) Date of publication of application: **04.10.2001**
(21) Application number: 01103512.8
(22) Date of filing: 15.02.2001
(51) Int. Cl.: G02B 6/42

(54) **Optical module**

(30) Priority: 29.03.2000 JP 2000092020
(71) Applicant: FUJITSU LIMITED, Kawasaki-shi, Kanagawa 211-8588 (JP)
(72) Inventor: Hakogi, Hironao, Nakahara-ku, Kawasaki-shi, Kanagawa 211 (JP); Watanabe, Tetsuo, Nakahara-ku, Kawasaki-shi, Kanagawa 211 (JP); Yamamoto, Naoki, Nakahara-ku, Kawasaki-shi, Kanagawa 211 (JP); Mesaki, Akitoshi, Nakahara-ku, Kawasaki-shi, Kanagawa 211 (JP); Miyata, Sadayuki, Nakahara-ku, Kawasaki-shi, Kanagawa 211 (JP)
(74) Representative: HOFFMANN - EITLE

(57) **Abstract**

An optical module (42) includes a ferrule (31) having a slope end surface (33) and supporting an optical fiber penetrated therethrough, a photodetector (34) attached to the slope end surface and optically coupled directly with the optical fiber, a module substrate (8) supporting the ferrule (31), and a resin package (41) covering the ferrule so that an end of the ferrule protrudes from the resin package.

## Description

### BACKGROUND OF THE INVENTION

### 1. Field of the Invention

The present invention generally relates to optical modules, and more particularly to an optical module equipped with a photodetector attached to an end surface of a ferrule, an optical fiber being penetrated through the ferrule along its central position and being fixed thereto. The present invention is directed to improving the attachment productivity and downsizing of an optical module as mentioned above.

An optical module for receiving an optical signal used for a main line system or a subscriber loop optical communication system is required to have a simple structure and is much more required to have a compact size and a good productivity.

### 2. Description of the Related Art

In order to meet the above-mentioned requirement, there are some proposals. In one of the known proposals, an optical connector of an optical fiber is detachably attached directly to an optical module mounted on a printed-circuit board unit. Another proposal is to arrange a photodetector close to an inner end surface of an optical module of a ferrule for connecting the optical module to an optical connector of an optical fiber.

In the proposals mentioned above, an optical system acting as an optical coupling means, such as optical guide member or a lens, is interposed between the end surface of the ferrule and the photodetector. Alternatively, the photodetector is attached directly to the end surface of the ferrule in such a way as to be optically coupled with the optical fiber in the ferrule. A pattern for electrical wiring is formed on the end surface of the ferrule or in the vicinity thereof, and is electrically connected to a wiring pattern of a circuit provided in the module.

Due to the interposing of the optical system, it takes much time to adjust the optical system so as to be placed in position with troublesome work. In addition, a space is needed for the adjustment. Thus, the interposing of the optical system prevents downsizing of the optical module.

The end surface of the ferrule to which the photodetector is fixed directly is arranged so as to be perpendicular to the axial center of the ferrule. This arrangement makes it difficult to implement direct wiring for interconnection. Thus, wiring for making a connection with the pattern provided in the ferrule is provided in advance, and a connection with an electronic component mounted on the printed-circuit board unit is made via the pattern.

### SUMMARY OF THE INVENTION

It is an object of the present invention to provide a downsized simple optical module which can be fabricated with excellent productivity.

The above object of the present invention is achieved by an optical module comprising: a ferrule having a slope end surface and supporting an optical fiber penetrated therethrough; a photodetector attached to the slope end surface and optically coupled directly with the optical fiber; a module substrate supporting the ferrule; and a resin package covering the ferrule so that an end of the ferrule protrudes from the resin package.

### BRIEF DESCRIPTION OF THE DRAWINGS

Other objects, features and advantages of the present invention will become more apparent from the following detained description when read in conjunction with the accompanying drawings, in which:
Fig. 1 is a plan view of a lead frame used in an optical module according to a first embodiment of the present invention;
Fig. 2 is a plan view of the lead frame shown in Fig. 1 on which electronic components are mounted;
Fig. 3 is a plan view of a module substrate having the lead frame on which a ferrule is mounted;
Fig. 4A is an enlarged plan view of the lead frame shown in Fig. 3;
Fig. 4B is a side view of the module substrate shown in Fig. 4A;
Fig. 5 is a plan view of the module substrate and its periphery coated with synthetic resin;
Fig. 6 is a plan view of an optical module which has been separated from the lead frame;
Fig. 7 is a circuit diagram of the optical module;
Fig. 8 is a perspective plan view of the optical module in which electrical connections between the components are illustrated;
Figs. 9A, 9B and 9C are diagrams showing an outer appearance of a package of the optical module;
Figs. 10A, 10B and 10C are diagrams of an outer appearance of the optical module;
Fig. 11 is a diagram showing a connection of the optical module with an optical connector;
Fig. 12 is a diagram showing a mechanism for connecting the optical module with the optical connector;
Figs. 13A, 13B and 13C are diagrams of a ferrule;
Fig. 14 is an exploded perspective view of a supporting base;
Fig. 15 is a perspective view showing how a positioning plate is fitted into a supporting base;
Figs. 16A, 16B and 16C are respectively diagrams of a lead frame used in an optical module according to a second embodiment of the present invention;
Fig. 17 is a perspective view of the step of attaching the supporting base to the module substrate;
Fig. 18 is another perspective view of the step of attaching the supporting base to the module substrate;
Figs. 19A, 19B and 19C are respectively diagrams of an assembled state of the optical module according to the second embodiment of the present invention;
Figs. 20A, 20B and 20C are respectively diagrams of a supporting base and a ferrule used in an optical module according to a third embodiment of the present invention;
Figs. 21A, 21B, 21C and 21D are respectively diagrams of a ferrule used in an optical module according to a fourth embodiment of the present invention;
Figs. 22A, 22B and 22C are respectively diagrams of a lead frame used in an optical module according to a fourth embodiment of the present invention; and
Figs. 23A, 23B and 23C are respectively diagrams of an assembled state of the optical module according to the fourth embodiment of the present invention.

### DESCRIPTION OF THE PREFERRED EMBODIMENTS

A description will be given, with reference to the accompanying drawings, of embodiments of the present invention in which an identical part is given the same reference numeral throughout the figures.

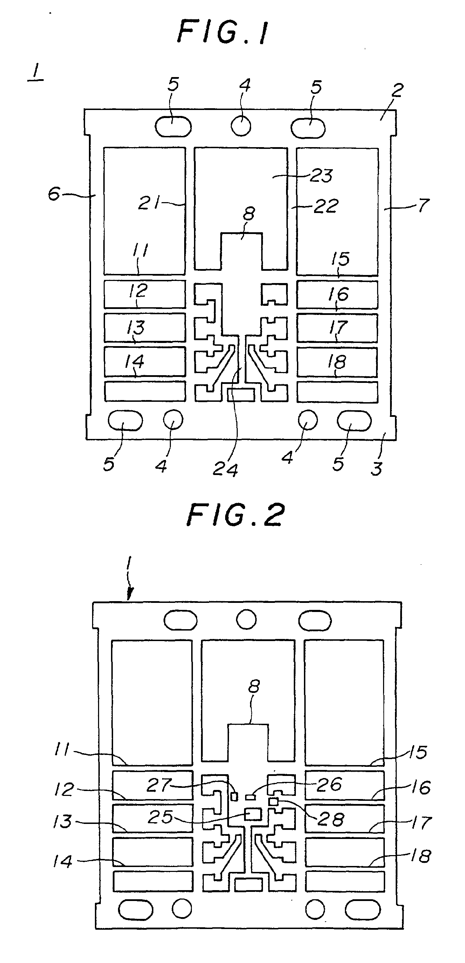

Fig. 1 is a plan view of a lead frame 1 for forming a module substrate of an optical module and lead terminals thereof. The lead frame 1 continuously extends rightwards and leftwards.

The lead frame 1 can be formed by punching a hoop member intermittently fed by a press machine. The hoop member is a long, band-shaped metal plate wound like a coil. Fig. 1 illustrates only one unit of the lead frame 1.

The lead frame includes band-shaped parts 2 and 3, each extending rightwards and leftwards. Circular holes 4 and longitudinal holes 5 are formed in the band-shaped parts 2 and 3. Reference pins for positioning in a production process are inserted into the circular holes 4. The longitudinal holes 5 are used to feed and transport the lead frame 1. The band-shaped parts 2 and 3 are joined by joint parts 6 and 7 so that a frame is defined.

A module substrate 8 and first through eighth lead terminal parts 11 - 18 extending rightwards and leftwards from the module substrate 8 are formed in the central portion of the lead frame 1. The lead terminal parts 11 - 18 are integrally coupled to the joint parts 6 and 7. Coupling parts 21 and 22 connect the band-shaped parts 2 and 3 and intersect the lead terminal parts 11 - 18.

A space part 23 is provided between a front end of the module substrate 8 and the band-shaped part 2. A thin support part 24 couples a rear end of the module substrate 8 and the band-shaped part 3.

As is clearly illustrated, the module substrate 8 is supported by the first lead terminal part 11, the fifth lead terminal part 15, the sixth lead part 16 and the support part 24.

The lead frame 1 is made of, for example, Kovar (the product name) and is 0.25 mm thick and 25 mm wide.

As has been described previously, the lead frame 1 extends rightwards and leftwards (in the direction in which the band-shaped parts 2 and 3 extend). The units of the lead frame 1 are maintained without being separated into individual parts until a production step that will be described later is carried out.

Referring to Fig. 2, on a front part on the mount surface of the module substrate 8, mounted are an IC chip 25, a relay terminal 26 of a chip shape, a capacitor chip 27, and a capacitor chip 28 close to the lead terminal part 16. The above electrical components can be bonded and fixed to the mount surface of the module substrate 8 by heating Ag paste interposed therebetween. The electrical components can be sequentially mounted on and bonded to the module substrate 8 by an automatic mount apparatus, so-called robot hand.

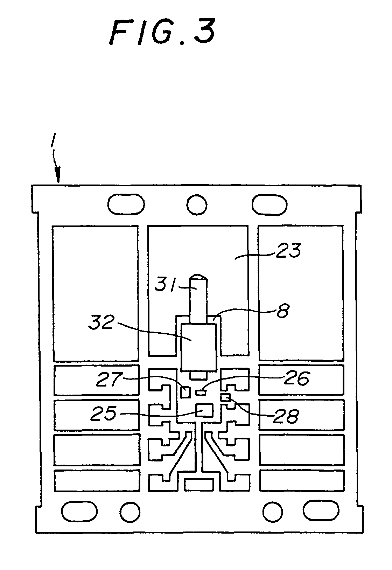

Referring to Fig. 3, a ferrule 31 is supported by a supporting base 32 mounted on and fixed to the module substrate 8. An end of the ferrule 31 protrudes from the supporting base 32 and extends over the space part 23. The other end of the ferrule 31 is close to the relay terminal 26.

The ferrule 31 has a cylindrical shape made of a ceramic material such as zirconia. An optical fiber is penetrated through the central portion of the ferrule 31 and is fixed. The ends of the optical fiber can be viewed from both the ends of the ferrule 31. The supporting base 32, which is made of a metal substrate such as stainless steal, is placed in position on the module substrate 8 and is fixed thereto by Ag paste by means of the robot hand or the like.

The ferrule 31 and the supporting base 32 are bonded and fixed by an appropriate adhesive agent or another method which will be described later.

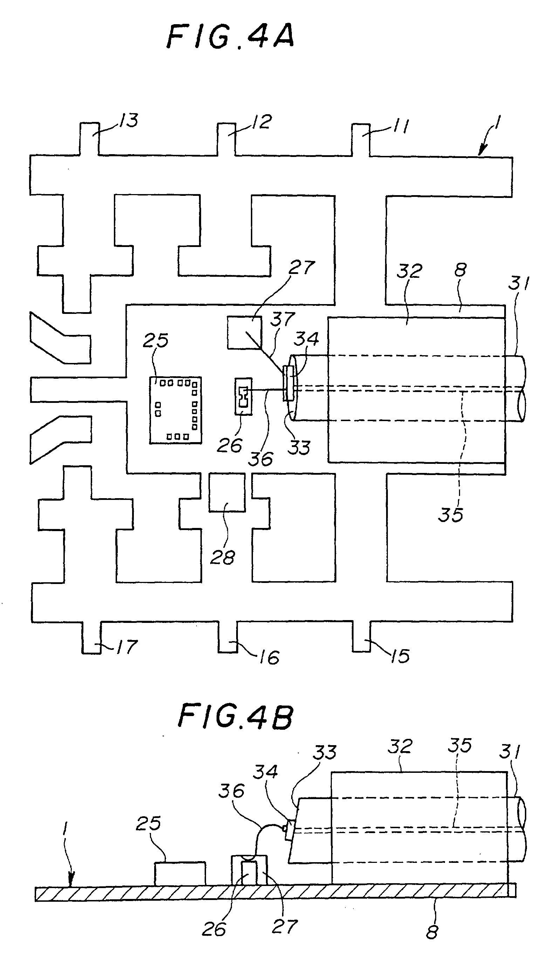

Fig. 4A is an enlarged plan view of a central part of the module substrate 8, and Fig. 4B is a side view of the optical module having a partially cross-sectional view taken along the central line of the lead frame 1. It is to be noted that electrodes of the IC chip 25, the relay terminal unit 26, the capacitor chips 27 and 28 to which wires for electrical connections are bonded are all mounted on the mount surface of the module substrate 8 flush with the upper surface of the lead frame 1. Electrical connections with the terminal parts 11 - 18 of the lead frame 1 can be made on the plane. In contrast, the prior art has an arrangement that an end surface 33 of the ferrule 31 is a vertical surface to which the back-surface side of a photodetector 34 is parallel. Thus, it is required to rotate a bonding head of the automatic mount apparatus for wire bonding by 90 degrees. At that time, the bonding head may touch the lead frame 1 or some components. Therefore, the prior art needs any means for avoiding the above-mentioned possibility.

With the above in mind, according to the present invention, the end surface 33 of the ferrule 31 is inclined at a given angle with respect to the imaginary vertical plane of the ferrule 31 orthogonal to the optical fiber 35.

It is known that an optical signal passes through the end surface of the optical fiber optically coupled with the photodetector, while an optical component is reflected by the end surface and is propagated through the optical fiber in the reverse direction. It is also known that the end surface of the optical fiber is inclined at an angle of approximately eight degrees in order to prevent the reflected light from traveling through the optical fiber.

In contrast, the present invention employs a greatly larger inclination angle of the end surface of the optical fiber 35 than the conventional inclination angle. The greatly large inclination angle makes it possible to prevent the optical signal from being reflected by the end surface of the optical fiber and to carry out wire bonding smoothly.

The photodetector 34 is bonded and fixed to the slope end surface 33 by providing an adhesive agent to the joint surface. The adhesive agent is, for example, a thermosetting-incorporated ultraviolet-ray-setting UV which can hardened by either ultraviolet-rays or heating. The light-receiving surface of the photodetector34 is positioned to the end surface of the optical fiber 35 and is pushed against it. Then, the ultraviolet-rays are irradiated onto the joint portion. Thus, the adhesive agent swelled out around the photodetector 34 is hardened, so that the photodetector 34 and the optical fiber 35 can be provisionally fixed to each other. Of course, the UV-setting adhesive agent is optically transparent, and thus the optical signal from the optical fiber 35 can enter into the photodetector 34 without any problem after it is hardened.

The ferrule 31 can be attached to the supporting base 32 after or before the photodetector 34 is attached to the ferrule 31 by the method mentioned above.

The ultraviolet-rays do not reach the adhesive agent interposed between the slope surface 33 and the photodetector 34, and is not hardened. However, the adhesive agent is hardened by a subsequent heating process.

A p-electrode pattern and an n-electrode pattern are formed on the back surface of the photodetector 34 so as to be arranged side by side. A ball that is formed at a tip end of a bonding wire 36 and is being heated is pressed against the p-electrode pattern. The other tip end of the bonding wire 36 is connected to a pattern of the relay terminal chip 26 so that a side surface of the bonding wire 36 is pressure-contacted to the pattern with pressure and is bonded thereto. Similarly, a ball that is formed at a tip end of a bonding wire 37 and is being heated is pressed against the n-electrode pattern. The side surface of the other tip end of the bonding wire 37 is contacted to an electrode formed on top of the capacitor chip 27 with a pressure applied thereto and is thus bonded thereto.

Similarly, a ball formed at a tip end of a bonding wire is pressed against an electrode pattern formed on top of the IC chip 25, and the side surface of the other tip end thereof is pressure-contacted and is bonded to a pattern of the relay terminal chip 26.

The above-mentioned wiring sequence for making electrical connections is employed due to an observation in which the ball of the tip end of the bonding wire can be pressed at a pressure lower than that at which the side surface of the wire is contacted and bonded. Thus, the process of pressing the ball may little damage the photodetector 34 and the internal circuit of the IC chip 25. The relay terminal chip 26 contributes to avoiding the components from being damaged during the wiring process.

The wires used are, for example, thin wires of gold. When the tip end of the gold wire is heated, it is melted and a ball is formed due to surface tension.

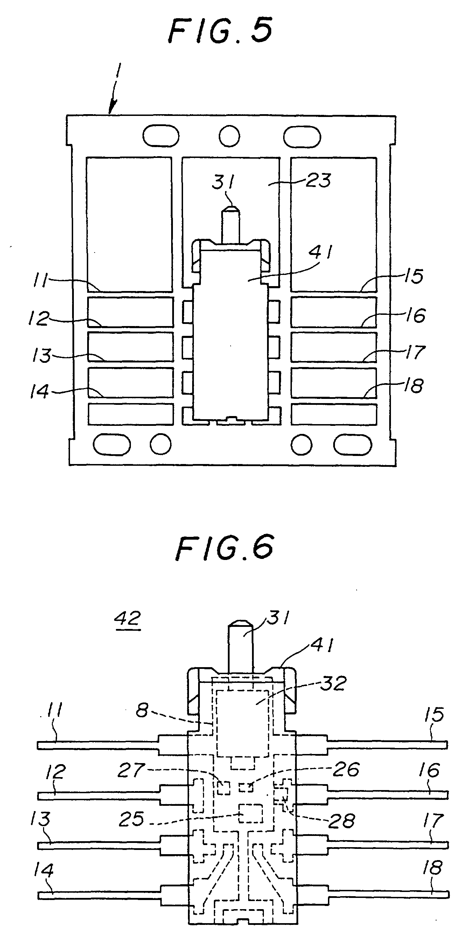

When the wiring is completed, the module substrate 8 except for the tip end of the ferrule 31 and the lead terminal parts 11 - 18 are placed in a mold, which is full of a synthetic resin such as an epoxy resin. Thus, as shown in Fig. 5, a resin package 41 is defined, in which the coupling parts 21 and 22 extends along the opposing sides of the package 41 in an exposed state. The tip end of the ferrule 31 protrudes from the resin package 41 and extends over the space part 23.

The resin package 41 contributes to surely fixing the module substrate 8, the lead terminal parts 11 - 18 and the ferrule 31 in given positions. An arrangement inside the package 41 is illustrated by broken lines shown in Fig. 6, in which the resin package 41 has been separated from the lead frame by cutting the joint parts 6 and 7, the coupling parts 21 and 22, and the support part 24. Hereinafter, the lead terminal parts 11 - 18 will be referred to as lead terminals.

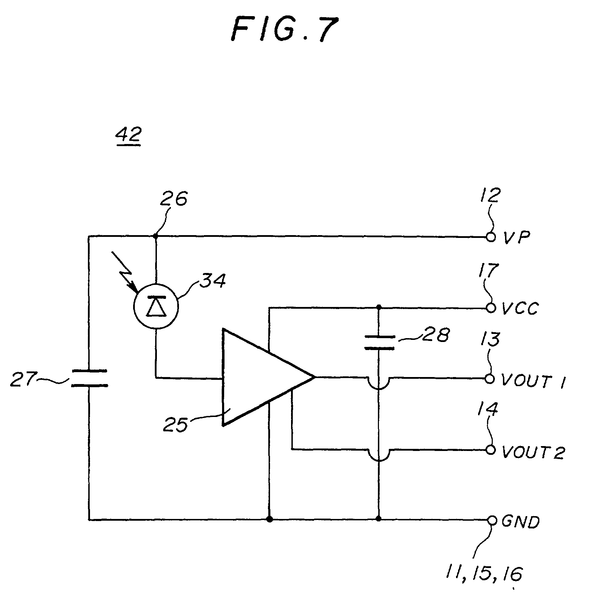

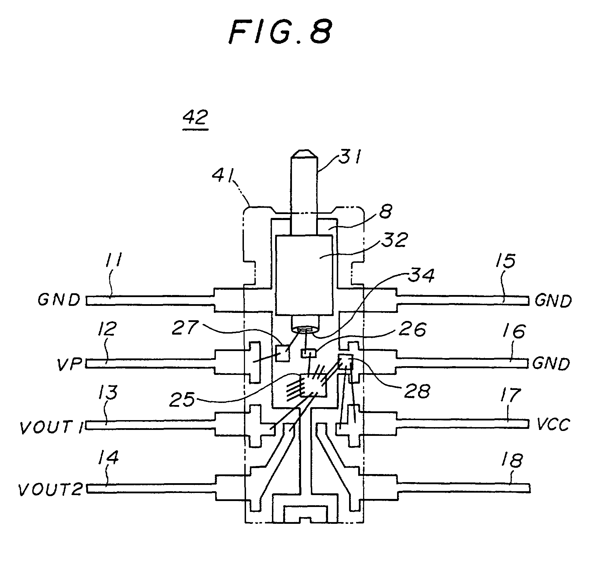

A description will be given, with reference to Figs. 7 and 8, of a circuit configuration of the optical module 42 and electrical connections. It Fig. 8, the package 41 is illustrated by a two-dot chained line so that the interior of the package 41 can be seen. The comparatively thin solid lines are used to depict the module substrate 8, the lead terminals 11 - 18, electronic components 25 - 28, 34, and the ferrule 31. The comparatively thick lines are used to illustrate wires.

The first lead terminal 11, the fifth lead terminal 15 and the sixth lead terminal 16 are connected to the module substrate 8 and are grounded. The second lead terminal 12 is a first power supply terminal via which a voltage VP is supplied. The seventh lead terminal 17 is a second power supply terminal via which a voltage VCC is supplied. The third lead terminal 13 is a non-inverting signal output terminal via which a signal voltage VOUT1 is output. The fourth lead terminal 14 is an inverting signal output terminal via which a signal voltage VOUT2 is output.

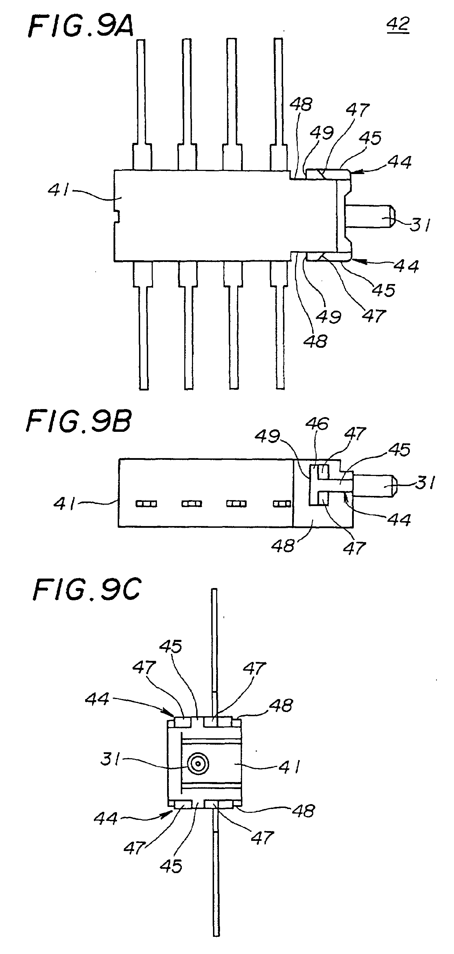

A description will be given, with reference to Figs. 9A, 9B and 9C, of the package 41 of the optical module 42. Fig. 9A is a plan view of the optical module 42, Fig. 9B is a side view thereof, and Fig. 9C is a front view thereof. On the front side of the optical module 42, T-shaped engagement protrusions 44 are symmetrically provided on the both sides of the package 41 so as to protrude from the front of the package 41 from which the ferrule 41 also protrudes.

A T-shaped leg part 45 of each of the T-shaped engagement protrusions 44 extends in the direction in which the ferrule 31 protrudes from the package 41, and is located on the axis of the ferrule 31 when viewed from the side and front of the optical modules 40.

An edge 46 of orthogonal to the leg parts 45 has slant surfaces 47 formed on both sides of each of the leg parts 45. The distance between side surfaces 48 of the package 41 close to the engagement protrusions 44 is shorter than the width of the package 41, as shown in Fig. 9A. A Surface 49 of the T-shaped edge 46 is perpendicular to the side surfaces 48.

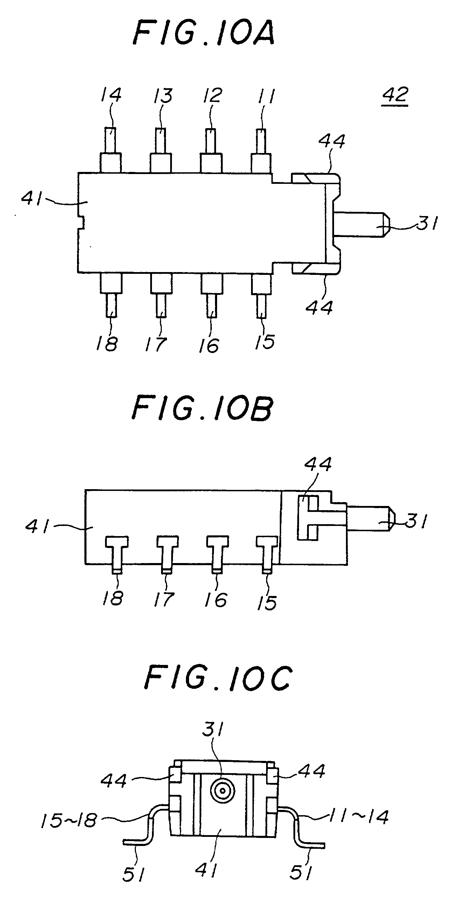

As shown in Figs. 10A, 10B and 10C, the lead terminals 11 - 18 of the optical module 42 are bent so as to have intermediate portions parallel to the side surfaces of the package 41 and end portions 51 extending outwards. The end portions 51 of the lead terminals 11 - 18 are slightly lower than the bottom surface of the package 41.

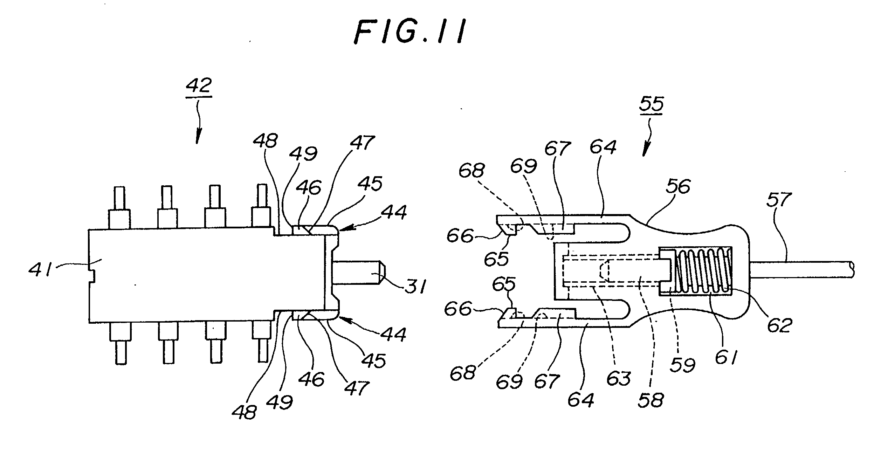

Fig. 11 is a plan view of the optical connector 42 and an optical connector 55 attached to a tip end portion of an optical fiber. The optical connector 55 will be described below.

A body part 56 of the optical connector 55 is made of a synthetic resin defined by molding. An optical fiber code 57 coated is inserted into the body part 56. An end of the optical fiber code 57 is fixed to a ferrule 58 through which an optical fiber is penetrated along the central axis. The ferrule 58 primarily has the same size as the ferrule 31 and is made of the same material as that of the ferrule 31. A base part of the ferrule 58 is fit into a flange 59 and is urged towards the front end of the ferrule 55 by a compressed coil spring 62 inserted into a window hole 61 formed in the body part 56 and located behind the flange 59.

A cylindrical sleeve 63 surrounds the periphery of the ferrule 58 so as to be penetrated through the intermediate portion of the body part 56 and tightly engages with the ferrule 58. The sleeve 63 has a diameter slightly shorter than the outer diameter of the ferrule 58, and has a slit having a narrow width extending longitudinally. When the sleeve 63 is pushed against the ferrule 58, the slit of the sleeve 63 becomes wider and resulting spring resilience allows the sleeve 63 to move along the outer surface of the ferrule 58.

The sleeve 63 is made of a substance having a good spring resilience, a small frictional resistance and a small abrasion loss, and is made of, for example, a ceramic material such as zirconia.

The length of the sleeve 63 has a length such that the end of the sleeve 63 contacts the flange 59 in the fitted state and the sleeve 63 greatly protrudes from the end of the ferrule 58.

The end of the body part 56 is formed so that a pair of opposing plate-shaped arms 64 protrudes on both sides of the body part 56. Hooks 65 are formed in end portions of the arms 64 so as to be opposite each other. The hooks 65 have slopes 66 inclined inwards.

Guides 67 are formed on opposing intermediate portions of the arms 64 so as to protrude from the inner walls of the arms 64. Guide grooves 68 and 68 are formed in the hooks 65 and the guides 67 extending longitudinally in the intermediate portions in the widths when viewed from the fronts thereof. The plate-shaped arms 64 can be deformed elastically so as to become close to or away from each other.

The distance between the opposing hooks 65 is equal to or slightly shorter than the distance between the opposing side surfaces 48 of the optical module 42 on which the engagement protrusions 44 are formed.

When the optical connector 55 is connected to the optical module 42, the optical connector 55 is brought close to the optical module 42. The end parts of the hooks 65 contact the side surfaces 48 of the engagement protrusions 44 and start to slide thereon. The optical connector 55 goes further while the guide grooves 68 are engaged with the leg portions 45 of the engagement protrusions 44.

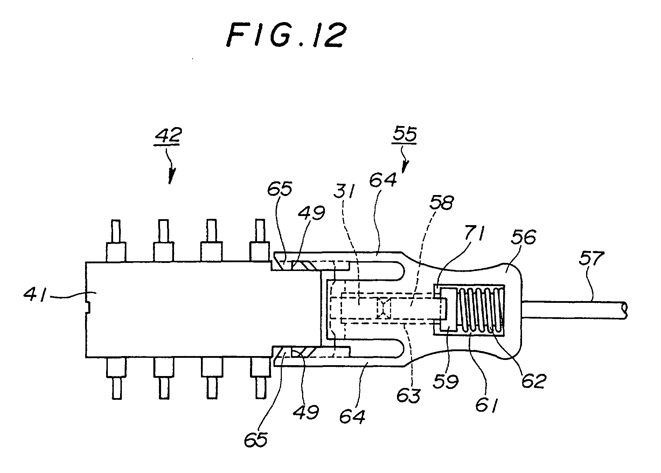

Then, the end of the ferrule 31 of the optical module 42 is brought into contact with the sleeve 63 and is fitted into the sleeve 63 while spreading the diameter of the sleeve 63. Due to further pushing, the slant surfaces 66 formed in the ends of the hook 65 come into contact with the slat surfaces 47 of the edges 46 of the engagement protrusions 44, and the ends of the arms 64 are spread outwards. Then, the hooks 65 ride over the edges 46, and are then engaged with the surfaces 49. Then, due to the resilience of the arms 64, the arms 64 returns to the original states in which the arms 64 are parallel to each other, as shown in Fig. 12.

In the above-mentioned process, the guide grooves 69 of the guides 67 of the optical connector 55 fit into and engage with the leg portions 45 of the engagement protrusions 44. Thus, the body part 56 of the optical connector 55 is maintained in the stable state.

The ferrule 31 of the optical connector 42 enters into the sleeve 63 of the optical connector 55, and the front ends thereof engage with the front ends of the ferrule 58 of the optical connector 55. Thus, the ferrule 58 is pushed and is moved in the body part 56. Thus, the flange 56 also moves so that the compressed coil spring 62 is resiliently compressed and deformed. Thus, as shown in Fig. 12, a gap 71 is formed between the window hole 61 and the end surface, and the optical module 42 and the optical connector 55 engage with each other in the stable state.

The resilient restoring force of the compressed coil spring 62 acts to push the hooks 65 against the surfaces 49 of the engagement protrusions 44 and keep the hooks 65 engaged with the surfaces 49. Thus, the hooks 65 cannot be disengaged with the surface 49 of the engagement protrusions 44.

The optical connector 55 can be detached from the optical module 42 by using a tool, which causes the front ends of the arms 64 to become away from each other. Thus, the hooks 65 are released from the engagement with the engagement protrusions 44. Then, the hooks 65 rides over the engagement protrusions 44, so that the optical connector 55 can easily be pulled out of the optical module 42.

By the above-mentioned way, the optical connector 55 can be attached to and detached from the optical module 42.

In the first embodiment of the present invention, the ferrule 31 in the optical module 42 is merely positioned and fixed to the supporting base 32 as shown in Fig. 3. An alternative arrangement of the ferrule 31 can be employed as will be described below.

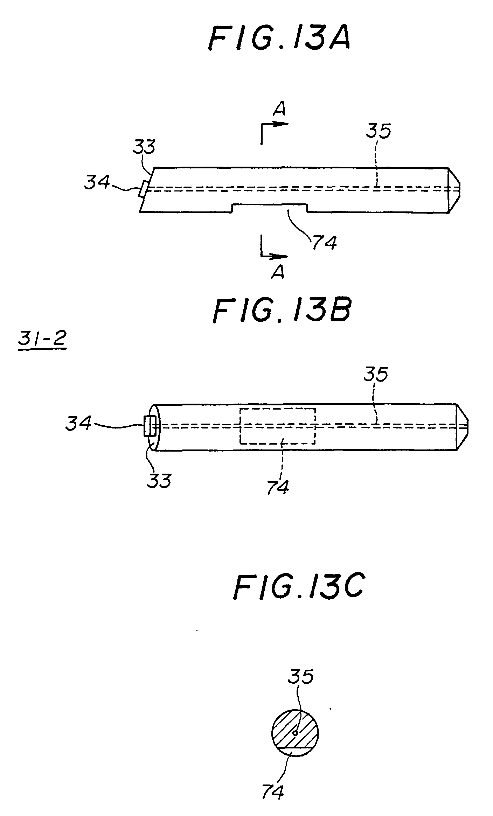

A description will be given, with reference to Figs. 13A, 13B and 13C, of a second embodiment of the present invention equipped with an alternative ferrule.

Fig. 13A is a side view of a ferrule employed in the second embodiment of the present invention, Fig. 13B is a plan view thereof, and Fig. 13C is a cross-sectional view taken along a line A-A shown in Fig. 13A.

The optical fiber 35 is embedded into the ferrule and extends along the central axis. The front end of the ferrule has a conical shape with the top cut off or a spherical shape, and the rear end thereof has the slant surface 33. The ferrule is made of the same material as that of the ferrule 31 used in the first embodiment of the present invention. The photodetector 34 to be optically coupled with the optical fiber 35 is attached to the slant surface 33.

The ferrule shown in Figs. 13A through 13C is characterized in that a cutout surface 74 is formed on the bottom surface on which the slant surface 33 is not formed. Hereinafter, a reference numeral 31-2 is assigned to the ferrule shown in Figs. 13A through 13C.

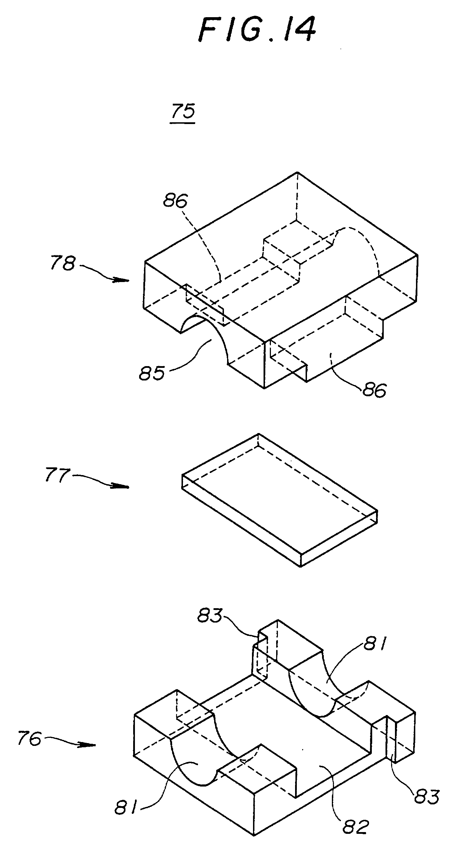

Fig. 14 is an exploded perspective view of a supporting base 75 combined with the ferrule 31-2. The supporting base 75 is primarily made up of a base part 76, a positioning plate 77, and a cover 78.

The base part 76 includes a substantially rectangular shape and two grooves 81 formed on the front and rear portions thereof. Each of the grooves 81 has a semi-circular shape. The base part 76 has a rectangular groove 82 formed so as to cross a continuous groove including the grooves 81. The base part 76 has projections 83, which extend outwards from the side surfaces of the front part of the base part 76.

The positioning plate 77 has a size which is just fitted into the rectangular groove 82 of the base part 76, and has a length equal to that of the cutout surface 74 of the ferrule 31-2.

The cover 78 includes the same rectangular shape as that of the base part 76, and has a groove 85 of a semi-circular shape so as to connect the front and rear ends together. The cover 78 has step parts 86 which are located at both sides of the groove 85 and protrude from the bottom surface downwards. The step parts 86 along the groove 85 have a length which allows the step parts 86 to be fitted into the rectangular groove 82.

The base part 76, the positioning plate 77 and the cover 78 are stacked as shown in Fig. 14 and are unified. In the unified state, the grooves 81 and 85 form a circle in the cross-section, and the circuit has a diameter equal to the outer diameter of the ferrule 31-2.

The base part 86, the positioning plate 77 and the cover 7I are made of a metal material such as stainless steel.

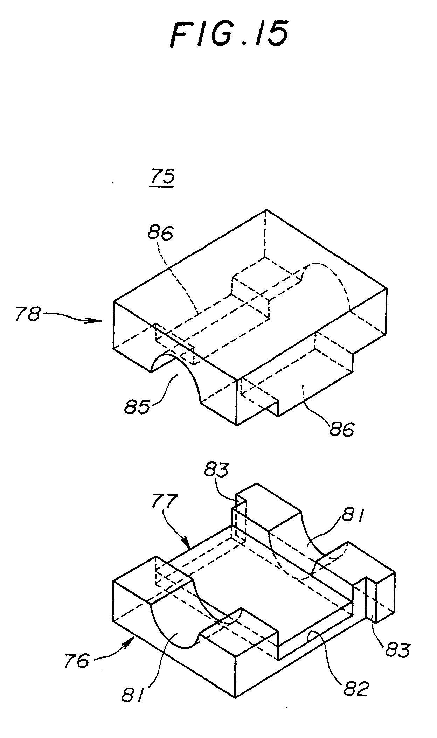

As shown in Fig. 15, the positioning plate 77 is fitted into the rectangular groove 82 of the base part 76, and is bonded thereto by an appropriate means such as an adhesive agent. The upper surface of the positioning plate 77 is a predetermined length higher than the bottom of the grooves 81.

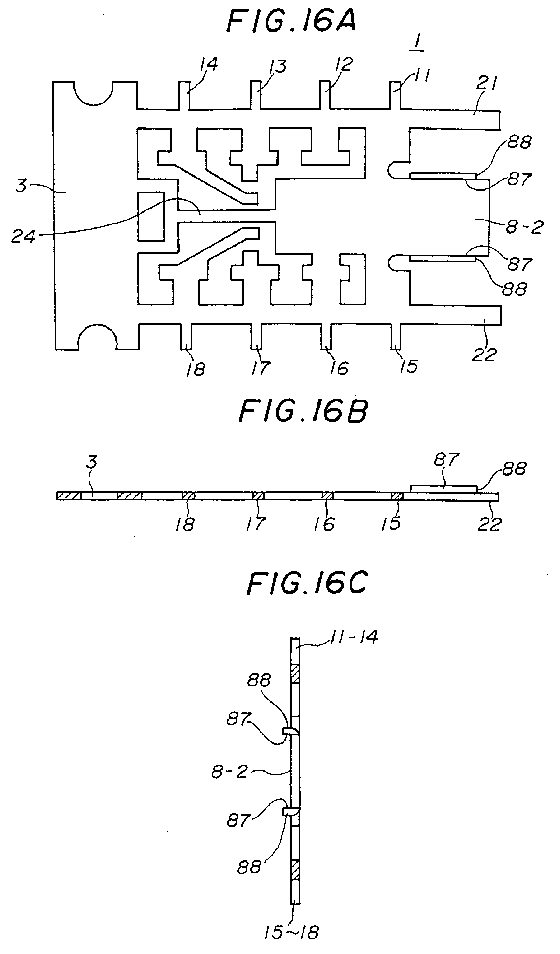

Referring to Fig. 16A, 16B and 16C, there is illustrated an essential part of the lead frame 1, which is characterized in that the module substrate 8 has a structure different from that of the lead frame 1 shown in Fig. 1. The other parts of the lead frame 1 shown in Figs. 16A through 16C are the same as those of the lead frame 1 shown in Fig. 1. Hereinafter, the same reference numeral 1 is assigned to the lead frame used in the second embodiment of the present invention, and a new reference number 8-2 is assigned to the base substrate used in the second embodiment.

More particularly, Fig. 16A is a plan view of the lead frame 1, Fig. 16B is a side view thereof, and Fig. 16C is a front view thereof. The module substrate 8-2 is flush with the lead frame 1, and has two walls 87 that are defined by bending the lead frame 1 and are located in the front part of the module substrate 8-2. The walls 87 stand upright and are parallel to each other. The walls 87 have end surfaces 88, which are slightly set back from the front end of the module substrate 8-2.

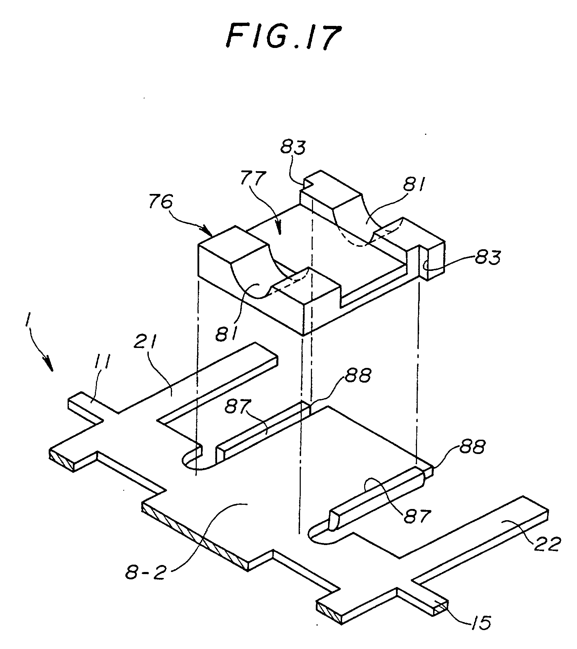

The supporting base 75 is attached to the module substrate 8-2, as shown in Fig. 17. The base part 76 is positioned above the module substrate 8-2. Next, the base part 76 is made to approach to the module substrate 8-2. At that time, it is important for the projections 83 to engage with the end surfaces 88 of the walls 87. The joint surfaces are coated with an appropriate amount of adhesive such as Ag paste in advance.

In order to engage the projections 83 with the end surfaces 88, the opposing side surfaces of the base part 76 are fitted into the space defined by the opposing walls 87. Then, the base part 76 is caused to slide along the walls 87 until the projections 83 are brought into contact with the end surfaces 88.

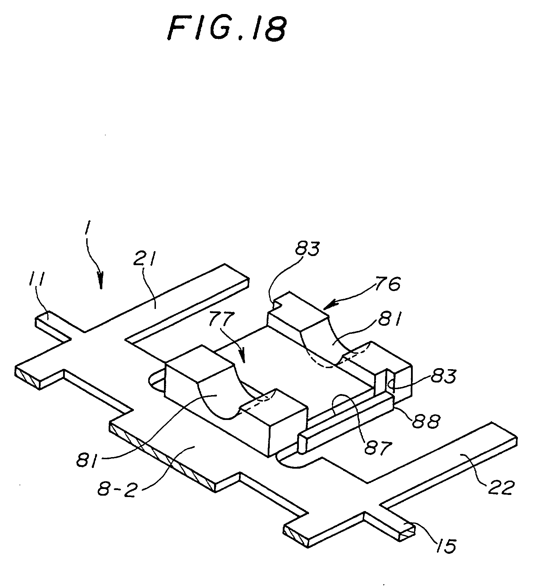

By fitting the base part 76 into the space defined by the walls 87, it is automatically positioned while the base part 76 is restricted to moving rightwards and leftwards and to be inclined. The base part 76 in the back and forth directions is positioned while being restricted to moving back and forth due to the engagement of the projections 83 with the end surfaces 88. Thus, the base part 76 can be positioned in all directions. Then, the incorporated assembly is heated with the base part 76 pressed against the base substrate 8-2. Thus, the adhesive agent is melted so that the base part 76 is bonded to the base substrate 8-2, as shown in Fig. 18.

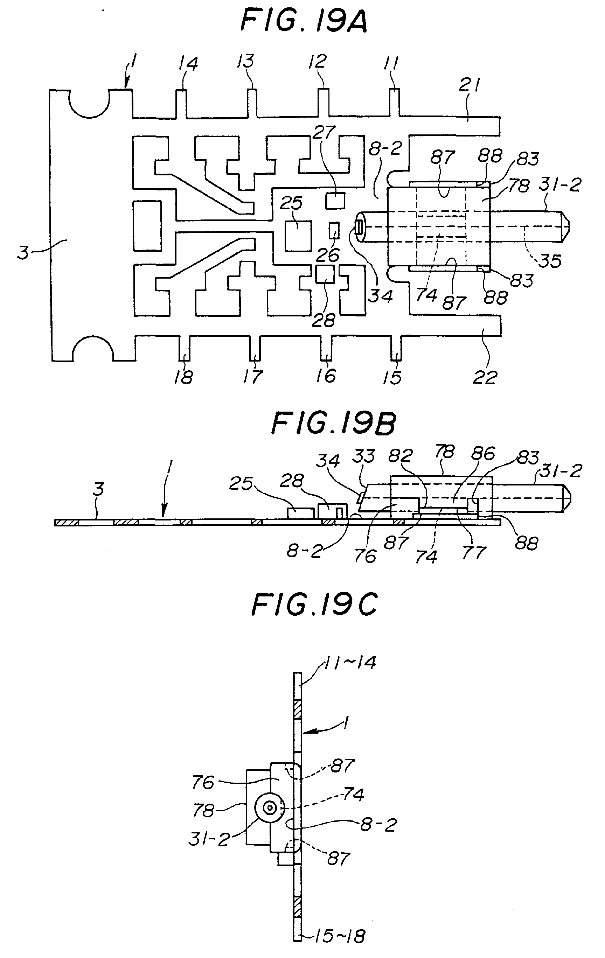

In the state shown in Fig. 18, the IC chip 25, the relay terminal chip 26, and the capacitor chips 27 and 28 are mounted on the module substrate 8-2, as shown in Fig. 3. Then, in the state shown in Fig. 19, the ferrule 31-2 is mounted on the upper surface of the base part 76 mounted on the module substrate 8-2.

Referring to Fig. 19 in addition to the figures related to the second embodiment of the present invention, the cutout surface 74 of the ferrule 31-2 is laid across the positioning plate 77 and is brought into contact therewith. Thus, the cylindrical parts of the ferrule 31-2 located on the front and rear sides thereof are fitted into the grooves 81, so that the ferrule 31-2 are positioned in the back and forth directions as well as the left and right directions. In addition, the attitude of the ferrule 31-2 in the rotational direction about the axis can be defined.

The cover 78 is attached to the top of the assembly in such a way that the step parts 86 of the cover 78 are fitted into the rectangular groove 82 formed in the base part 76. Thus, the step parts 86 of the cover 78 are fitted into the rectangular groove 82, so that the upper surface of the ferrule 31 is fitted into the semi-circular groove 85 and is positioned.

In advance of the above assembly process, the bonding surfaces are coated with an appropriate adhesive agent such as a thermosetting type adhesive agent. By applying heat to the adhesive agent, it is hardened so that the components that are pushed against each other with a pressure can be fixed together.

Figs. 19A, 19B and 19C show the assembly with the components bonded together. More particularly, Fig. 19A is a plan view of the assembly, Fig. 19B is a side view thereof, and Fig. 19C is a front view thereof. There is a fine gap between the components to be bonded and can be filled with the adhesive agent. In the assembly, the slant surface 33 of the ferrule 31-2 face upwards and is placed in the given position with respect to the module substrate 8-2. The above arrangement is suitable for not only the assembly work by an automatic assembly apparatus but also the wiring work by an automatic wiring apparatus.

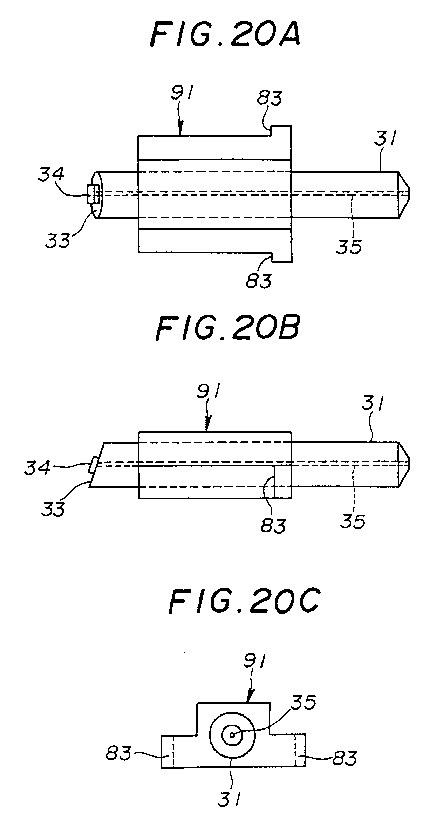

As described above, the supporting base 75 is made up of the divided components. Alternatively, a single-piece supporting base 91 shown in Figs. 20A, 20B and 20C can be employed. Fig. 20A is a side view of the supporting base 91 employed in a third embodiment of the present invention, Fig. 20B is a side view thereof, and Fig. 20C is a front view thereof. The supporting base 91 has projections 83 which are located on the front side and extend outwards. The projections 83 are directed to reducing the weight of the optical module and facilitating the holding by the robot hand of the automatic assembly apparatus.

The present embodiment employs the ferrule 31 of the cylindrical shape. The supporting base 91 has a through hole connecting the front and rear ends thereof. The joint surfaces of the ferrule 31 and the supporting base 91 are coated with a thermosetting adhesive agent, which is heated after the ferrule 31 is inserted into the through hole of the supporting base 91. Thus, the ferrule 31 is fixed to the supporting base 91.

The supporting base 91 is mounted on the module substrate 8-2 of the lead frame 1. In this case, the joint surfaces are coated with an adhesive agent. The supporting base 91 slides on the module substrate 8-2 so that the projections 83 of the supporting base 91 are brought into contact with the end surfaces 88 of the walls 87, as has been described with reference to Figs. 19A through 19C.

After the ferrule 31 is attached to the supporting base 91, the supporting base 91 may be attached to the module substrate 8-2, or vice versa. The order of the above two steps can be arbitrarily selected. This holds true for the first and second embodiments of the present invention.

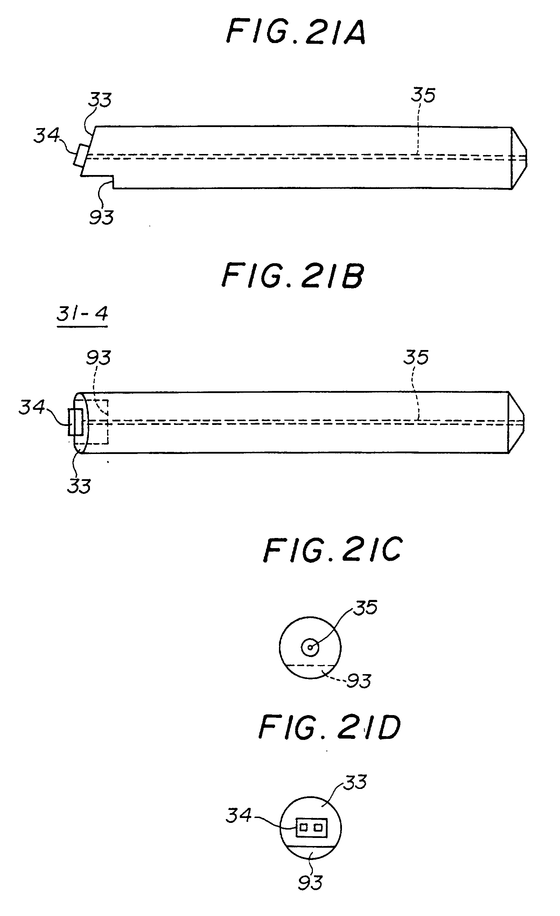

Figs. 21A through 21D show a ferrule used in a fourth embodiment of the present invention. More particularly, Fig. 21A is a side view of such a ferrule, Fig. 21B is a plan view thereof, Fig. 21C is a front view, and Fig. 21D is a rear view thereof.

Referring to these figures, the optical fiber 35 is embedded into the ferrule and extends along the central axis. The front end of the ferrule has a conical shape with the top cut off or a spherical shape, and the rear end thereof has the slant surface 33. The ferrule used in the fourth embodiment of the present invention is made of the same material as that of the ferrule used in any of the aforementioned embodiments of the present invention. The photodetector 34 is attached to the slant surface 33 so as to be optically coupled with the optical fiber, as has been described with reference to Figs. 4A and 4B.

A cutout surface 93 for positioning the ferrule is formed in an end part of the bottom surface of the ferrule so that an angle is defined together with the slant surface 33. The ferrule shown in Figs. 21A through 21D is assigned a new reference number 31-4.

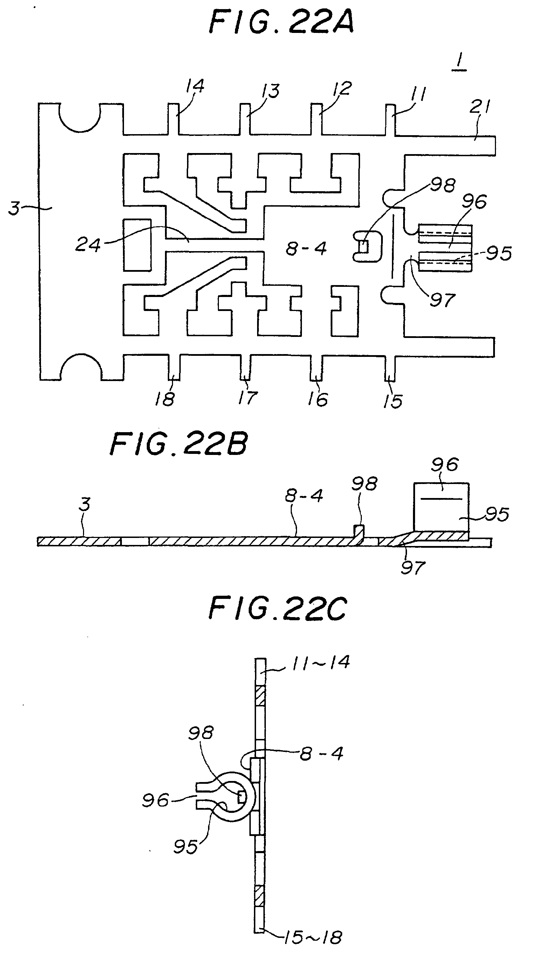

Referring to Fig. 22A, 22B and 22C, there is illustrated an essential part of the lead frame 1, which is characterized in that the module substrate 8 has a structure different from the structure of the lead frame 1 shown in Fig. 1. The other parts of the lead frame 1 shown in Figs. 22A through 22C are the same as those of the lead frame 1 shown in Fig. 1. Hereinafter, the same reference numeral 1 is assigned to the lead frame used in the fourth embodiment of the present invention, and a new reference number 8-4 is assigned to the base substrate used in the fourth embodiment.

More particularly, Fig. 22A is a plan view of the lead frame 1, Fig. 22B is a side view thereof, and Fig. 22C is a front view thereof. The module substrate 8-4 is flush with the lead frame 1, and has a hollow cylindrical part 95 which is defined by bending the lead frame 1 and is located in the center of the ferrule 31-4. An opening 98 is formed so as to connect the front and rear ends of the ferrule 31-4 and extend along the central axis thereof. The top ends of the cylindrical part 95 are close to and parallel to each other.

As clearly shown in Fig. 22B, the module substrate 8-4 has a bent part 97 which causes the center of the cylindrical part 95 to be positioned at a level higher than the level of the module substrate 8-4 by a predetermined height. The cylindrical part 95 has an inner diameter and a shape which allow the outer surface of the ferrule 31-4 to engage with the inner surface of the cylindrical part 95 so that the ferrule 31-4 can be surely held by the cylindrical part 95.

A projection 98 for positioning stands upright from the module substrate 8-4. The projection 98 may be formed by upwardly bending a part of the module substrate 8-4 defined by cutting off the peripheral portion thereof.

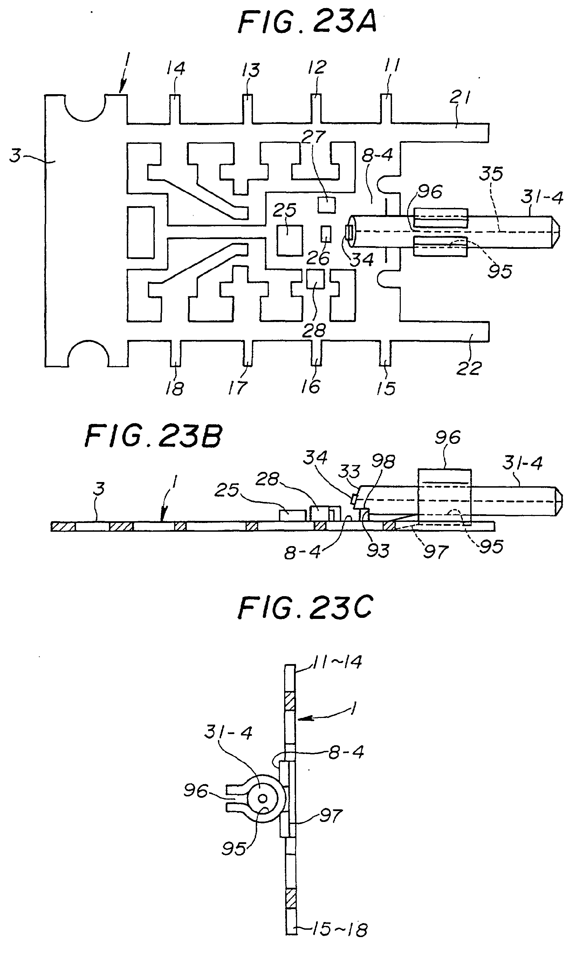

Referring to Figs. 23A, 23B and 23C additionally, the inner wall of the hollow cylindrical part 95 is coated with an adhesive agent. The cylindrical part 95 is cause to be spread slightly against the resilience thereof by engaging a tool therewith. In this state, the ferrule 31-4 is inserted into the cylindrical part 95 so that the slant surface 33 is the first to enter.

The cutout surface 93 of the ferrule 31-4 is brought into contact with the projection 98, so that the ferrule 31-4 is positioned in the axial direction with respect to the module substrate 8-4 and the rotational direction about the axis. By releasing the force that causes the opening 96 to be slightly wider, the ferrule 31-4 can be positioned in the vertical and lateral directions. Then, the adhesive agent is heated and hardened, so that the ferrule 31-4 can surely be fixed to the module substrate 8-4.

In the above state, the IC chip 25, the relay terminal chip 26, and the capacitor chips 27 and 28 are mounted on the module substrate 8-4 in an arbitrary order.

In the second through fourth embodiments of the present invention, the same processes as those shown in Figs. 4A through 10C are carried out.

The present invention is not limited to the specifically disclosed embodiments, and variations and modifications may be made without departing from the scope of the present invention.

## Claims

1. An optical module comprising:
a ferrule having a slope end surface and supporting an optical fiber penetrated therethrough;
a photodetector attached to the slope end surface and optically coupled directly with the optical fiber;
a module substrate supporting the ferrule; and
a resin package covering the ferrule so that an end of the ferrule protrudes from the resin package.

2. The optical module as claimed in claim 1, further comprising a supporting base mounted on the module substrate, the supporting base supporting the ferrule.

3. The optical module as claimed in claim 1, further comprising electronic parts mounted on the module substrate.

4. The optical module as claimed in claim 1, wherein the resin package comprises engagement protrusions that are to be engaged with an optical connector.

5. The optical module as claimed in claim 1, wherein:
the resin package comprises engagement protrusions which are to be engaged with an optical connector; and
the engagement protrusions extend along side surfaces of the resin package.
